# EUROPEAN PATENT APPLICATION

(11) **EP 3 509 004 A1**
(43) Date of publication of application: **10.07.2019**
(21) Application number: 18150133.9
(22) Date of filing: 03.01.2018
(51) Int. Cl.: G06F 21/60, H04L 29/06

(54) **ADAPTION OF MAC POLICIES IN INDUSTRIAL DEVICES**

(71) Applicant: Siemens Aktiengesellschaft, 80333 München (DE)
(72) Inventor: Belhachemi, Omar, 80639 München (DE); Falk, Rainer, 85586 Poing (DE); Feist, Christian Peter, 80689 München (DE); Fischer, Kai, 85598 Baldham (DE); Friedrich, Daniela, 81541 München (DE); Fries, Steffen, 85598 Baldham (DE); Heintel, Markus, 81377 München (DE)

(57) **Abstract**

The present invention relates to a method, system and device (D) for adapting a MAC policy for processes (P), running in different security domains (SD) on an embedded industrial device (D) within a cyber-physical network (NW). The method comprises:
- Providing a policy administration point (PAP) locally on the industrial device (D) for at least one of the security domains (SD);
- Providing an adapted MAC policy (10) in the policy administration point (PAP);
- Checking integrity and authenticity of the adapted MAC policy and in case of validation:
- Automatically instructing the industrial device (D) to implement the adapted MAC policy (10).

## Description

The present invention refers to methods, apparatuses and systems for providing security mechanisms for a computer system, in particular to an embedded system within a network of industrial devices.

In modern technical production or automation systems, industrial end devices are digitally connected and communicating over a network. For example, in automotive systems, devices are used for control of the motor system, the window movement and respective motors, the media system and/or a system for aggregating diagnostic data for the purpose of technical diagnosis. Each device may comprise its own computer system with a dedicated function within a larger mechanical and/or electrical system. The digital computer-based system (e.g. microprocessor, microcontroller with additional peripherals, including but not limited to RAM, persistent storage and interface controllers) may thus be embedded as part of a complete device often including hardware and mechanical parts (like for example factory controllers, controllers in automation systems or for use in avionics). The processor(s) may be used for a variety of specialized computations, or may even be custom designed for the application at hand. Common applications in the industrial context can include digital signal processing, machine learning, computer vision, real-time control or applications for monitoring manufacturing processes.

For all the different kinds of processes to be executed on the device, different security domains can be defined. A security domain defines which operations a process running in the security domain is able to execute. As a result, the process will be restricted to a certain known-good behavior. Should such a process try to exhibit unintended behavior, e.g. induced through malicious means by an attacker, it will be prohibited from doing so due to the restrictions imposed by the security domain it is running in.

The devices, known in the art, are typically manufactured and equipped with a mandatory access control (MAC) mechanism, that can be used to define and enforce security domains for processes running on the device. MAC refers to a type of access control by which the operating system constrains the ability of an application, process or thread to access or generally perform some sort of operation on a resource or target, like e.g. a file, directory, TCP/UDP port, shared memory segment, IO devices, etc. The processes and resources each have a set of security attributes. Whenever a process attempts to access a file or other resource, an authorization rule enforced by the operating system kernel examines these security attributes and decides whether the access can take place. Any operation by any process on any object is tested against the set of authorization rules, defined in a MAC policy, to determine if the operation is allowed.

With mandatory access control, this security policy is centrally controlled (for example by a central administrator) and users and processes do not have the ability to override the policy, either accidentally or intentionally, and, for example, cannot grant access to files that would otherwise be restricted. By contrast, discretionary access control (DAC), which also governs the ability of subjects to access objects on a more coarse-grained level, allows users the ability to make policy decisions and/or assign security attributes.

MAC mechanisms are commonly used in operating systems, like e.g. Linux with a human administrator who is responsible for defining the MAC policy.

However, industrial devices or devices for "Industry 4.0 systems", digital systems or industrial Internet systems, which are used in the field, have to be operated autonomously, i.e. without a human administrator.

For these devices, however, there is a need, to define the MAC policy flexibly and to adapt the MAC policy settings even after commissioning or start-up of the device during its operation.

From the state of the art the following documents are known: document US 8,531,247 B2, document US 8,892,616 B2, document US 8,300,811 B2, document US 9,147,088 B2, document US 9584311 B2, document EP 2976707 B1, document EP 2 605 445 B1, document EP 2 870 565 A1, document EP 2 891 102 A1, document WO 2017137256 A1, document EP 2870565 B1, document EP 3028140 B1, document EP 17175275 and document US 8 843 761 B2.

Therefore, it is an object of the present invention to improve the security settings for an industrial device. In particular, the security settings should be flexibly amendable without re-boot of the device, without having to update the entire device firmware and without human interaction.

This object is achieved by a method, system, a device, and a computer program according to the pending independent claims. Advantageous features and embodiments are mentioned in the dependent claims and in the description.

According to a first aspect, the invention relates to a method for adapting or updating a mandatory access control (in the following also abbreviated as MAC) policy for processes, which may run in different security domains on an industrial device within a network of devices. Typically, a set of different processes are executed on the device in different security categories or security domains. The method comprises the following steps:
- Providing at least one policy administration point (in the following abbreviated as PAP) locally on the industrial device, whereas each PAP is associated to at least one of the security domains which it can administer;
- Providing an adapted or updated MAC policy to the PAP (for example in a table-formatted data structure);
- Checking integrity and authenticity of the received adapted MAC policy and in case of validation:
- Instructing the industrial device to automatically implement the adapted MAC policy.

One core idea of the invention is to extend and improve the mandatory security settings of an autonomous device during operation in the field without reboot of the device. The security settings should be amendable autonomously in response to detected conditions. The conditions to be detected and considered are pre-configurable and may for example relate to a state of the device, to operating conditions, to sensor data, to a context (for example a runtime environment condition).

According to a preferred embodiment, at least one PAP is provided or allocated for and thus responsible for one security domain (for selected processes on the device). Thus, each of the devices is equipped with at least one PAP. This improves flexibility of the method. It is possible to provide a 1-to-n-relation for PAP and security domain. Thus, one single PAP may be responsible for at least one and also for more than one security domain. However, it has to be assured that not more than one single PAP is responsible for one dedicated security domain. Responsibility for a security domain entails that only the responsible PAP is able to modify the managed security domain(s) and no others. This ensures that if a malicious party is in control of a PAP, that it cannot modify the security domains managed by other PAPs on the device.

According to another preferred embodiment, a master PAP is provided for all PAPs, wherein the master PAP instructs all PAPs specifically and in a dedicated manner with its corresponding adapted MAC policy, wherein the master PAP is responsible for checking integrity and authenticity of the received adapted MAC policy centrally and commonly for all PAPs. This aspect has the advantage, that complexity of the PAPs may be reduced in that tasks and duties which need to be executed for all PAPs may only be executed once in the master PAP and need not to be carried out redundantly on each of the PAPs.

According to another preferred embodiment, a state of the device (e.g. operating mode of the device, end of boot mode, service mode) is detected automatically and in response to the detected state, the MAC policy is determined or updated and activated automatically. This has the advantage that automation of a MAC policy adaption may be improved. For example, a particular operating phase of the device (which may be pre-configured in a preparation phase) may be detected (e.g. a boot phase or a self-test phase) and in response to the detected phase, the actualization of the MAC policy may be triggered. In another embodiment, sensors are provided in the device or in the system, external to the device for providing sensor data. Sensor data may e.g. relate to a failure of a component or to detecting a compromising state.

According to another preferred embodiment, the adapted MAC policy is provided by receiving the same from a device external network entity, for example a security server. This aspect makes it possible to centrally administer all the devices with either a common MAC or device-specific MAC policy.

According to another preferred embodiment, the adapted MAC policy is provided by automatically analyzing the application to be executed on the device or the process respectively. The analysis aims at extracting security rules from the application binary file, based on an application / process analysis mechanism, which is executed locally on the device. Preferably, the process analysis mechanism (i.e. the mechanism for analyzing the application) is executed after an application update has been loaded on the device or after installation of a new application on the device. This helps to further improve automation of the MAC policy adjustment on the devices.

According to another preferred embodiment, the process analysis mechanism analyzes the process with respect to its interfaces and parameterizes a pre-configurable template for determining the MAC policy automatically. The template is provided on the PAP. During runtime, the PAP may execute the analysis mechanism in order to parameterize the pre-configured template. The PAP or a subcomponent thereof extracts the rules of the application or application update. For example, it is analyzed which input/output interfaces the application accesses or it is analyzed whether the application manipulates or addresses real time control functions. The policy rules of the application may be defined by using dependencies or an if-then-structure (e.g. "access to USB interface, if available"). Further, the PAP may automatically fill the template on the basis of the extracted abstract rules and definitions of the application. Metadata may be detected (e.g. source or manufacturer of the application/update) and may be used by the PAP to further deduce security settings and for automatically adapting or extending the MAC policy.

According to another preferred embodiment, the method comprises to automatically detect a deletion or de-installation of an (application) process on the device and based thereon the corresponding adaptations of the MAC policy, which have been implemented, entered or activated in response to installation of the process, are automatically removed again. This makes it possible to restore a prior security setting, which was valid prior to installation of the new application. Thus, changes to the MAC policy may be reversed again. In case an application is no longer active on the device, this system state is detected automatically and the MAC policy is amended in response thereof.

According to another preferred embodiment, the MAC policy may control access to shared processes (or resources), i.e. to processes which are shared between (cooperating) devices. In this case, a decision with respect to the adaption of the MAC policy has to be verified and validated by all cooperating devices. Only in case a verification signal for adaption of the MAC policy is received from all cooperating devices, the MAC policy may be changed.

In some embodiments it is possible that the device communicates with a central unit, for example for service requests or for authorizations. In these cases, it is possible to attach the adapted MAC policy rules to the communication data packets, which are exchanged with the central unit (e.g. in software defined networks (SDN) or in sliced virtual logical network systems, Slice/VLN systems). Upon authorization to use a service in a virtual network, the central unit that is in charge of managing the virtual networks can therefore also provide a device with an adapted MAC policy, using dedicated messages. The adapted MAC policy may contain rules that allow certain processes on the device to communicate with services in the network. Access to services in the network can therefore be adapted on a fine-grained process-level, in addition to a device-level.

In embodiments which refer to internet of things networks, several devices of different kind are connected. In this setting, resources (for example services provided by a device in the network that can perform certain production steps) may be shared between different devices. In such embodiments, the adaption of a MAC policy may require a verification signal from all cooperating devices or a set of privileged cooperating devices. In a virtual logical network (VLN) a device in a first step may only access a default network. Only after receiving consent in form of a verification signal from all cooperating devices, the device is allowed to access the "real" VLN in a second step, and thus services offered by other devices in the network. In addition, access to certain VLNs can be controlled using a MAC policy on a device. Processes on the device can therefore be allowed to communicate with other VLN participants by adapting the MAC policy accordingly, based on decisions by other participants of the network. This feature has the advantage to implement majority decisions for the adaption of a MAC policy.

According to another preferred embodiment, the method for adapting the MAC policy is executed automatically after connecting to the network and in particular within the context of a network endpoint assessment (NEA). The NEA reference model provides owners of networks a mechanism to evaluate the posture of a system. An overview on network endpoint assessment is given in Internet standard RFC5209. The protocol to distribute the security posture information is specified in RFC 5793. Also, Trusted Network Communications (TNC) as specified by the Trusted Computing Group (TCG) can be used to provide an information on the security state of a network endpoint. Note that the TCG IF-TNCCS 2.0 protocol is equivalent to the IETF "Posture Broker (PB) Protocol Compatible with Trusted Network Connect" (PB-TNC) defined by RFC 5793. This assures that the operating system and the installed applications and processes on the respective device are conforming with the MAC policy. As a result, a list with installed applications which are in conformity with the MAC policy (inventory list) may be provided. This result may be provided to a PAP for further processing on the device.

The adapted MAC policy may be signed or may be secured using a cryptographic method. This enhances security in that the integrity and authenticity of the adapted MAC policy can be verified, and that unintended or intended changes can be detected.

In another aspect the invention refers to a system for adapting a MAC policy for processes, running in different security domains on an industrial network device, wherein each of the industrial network devices comprises at least one policy administration point (PAP), in which an adapted MAC policy is provided, and wherein the system further comprises a validation module, which is adapted to check integrity and authenticity of the received adapted MAC policy and which is further adapted to instruct the industrial network device to automatically implement the adapted MAC policy in case of validation.

In a preferred embodiment, the system further comprises a master policy administration point, wherein each of the policy administration points is subordinated communicating with the master policy administration point, wherein the master policy administration point comprises the validation module for checking integrity and authenticity for all PAPs.

In another aspect the invention refers to an industrial network device with a policy administration point in which an adapted MAC policy is provided for adapting a MAC policy for processes, running in different security domains of the industrial network device for use in a system according to any of the preceding system claims.

In another aspect the invention refers to a computer program with program code for executing a method according to any of the preceding method claims, if the computer program is executed on an industrial network device.

In the following a short definition of terms is given.

The term MAC policy refers to a mandatory access control policy. It relates to a set of security rules for accessing resources on the device. The set of security rules precisely defines which security domain has access to a resource on the device, in particular to a process running on the device or to data, and the extent of access once the resource is accessed. The MAC policy cannot be changed with user interaction. So, a MAC policy is enforced independently from user-defined permissions. The Trusted Computer System Evaluation Criteria (TCSEC) defined MAC as "a means of restricting access to objects based on the sensitivity (as represented by a label) of the information contained in the objects and the formal authorization (i.e., clearance) of subjects to access information of such sensitivity". The MAC policy is typically enforced by the operating system (OS) kernel. Linux-based systems may serve as operating systems. Commonly, it has been designed to be a fixed, unchangeable policy. In some implementations, it can be modified only by specially trusted processes on the device, running in a security domain with corresponding access rights to alter the policy. Note that mandatory access control can also be called mandatory integrity control.

The industrial device may be an embedded system, an industrial control device, a control computing entity and/or a control unit in different types of systems, such as a railway monitoring device, a device controlling part of a manufacturing process, a robot and/or a network switch. The network switch may in particular be part of a software defined network (SDN). The device may be an SDN controller, a mobile base station or an access point in a wireless network, like a WLAN access point.

The industrial device (in short: device) is part of a network and may cooperate with other devices. The device may be an embedded system, an internet of things device or a device in the context of "Industry 4.0 systems", digital systems or Industrial Internet systems. Further, the device may be or may be part of a cyber-physical system, or a device within a cloud computing or cognitive computing system. The devices are connected via a network. The network may be a physical, a virtual and/or a logical network.

A process is to be understood as a process running on the device. It may be an application, providing a particular functionality, for example monitoring and controlling certain input and output signals in an embedded system.

A policy administration point (in short PAP) is a reliable process which is provided locally on the device. A device can contain multiple PAPs. The PAP executes a MAC policy management function. The PAP may be provided as service for the device. The PAP serves to exclusively administer one or more associated security domains of the MAC policy in dependence of or in response to different pre-configurable trigger events. A PAP will only be able to alter the security domains that are allocated to it. In addition, no two PAPs on a device should be able to alter the same domain. This confines the extent of a compromised PAP to only those security domains that are allocated to it. The trigger events may refer to the detection of a new installation of a process or an updated installation of an installed process on the device or to the detection of a status or configuration change of the device (e.g. boot mode - operating mode) or to detection of a new or renewed connection to a network. If required, a PAP can verify the integrity and authenticity of an adapted MAC policy, either by itself or using a verification service provided by a dedicated process on the device, depending on the implementation.

The PAP is communicating with device external network nodes to receive an adapted MAC policy. The adapted MAC policy may be provided in one of several embodiments of a dedicated MAC policy data structure. The adapted rules can, for example, be provided through additional policy source files that amend or replace policy source files in the format of the respective MAC technology. The adapted MAC policy may also be transmitted in an abstracted or metadata format, e.g. using a (set of) JSON-file(s), from which the PAP can derive rules that conform to the format and semantics of the respective MAC technology. The MAC policy data structure may be included in a digitally signed download archive of an app download file.

A security domain is a set of rules and settings relating to security of the device. In the context of this application, a security domain is a logical grouping of rules in a MAC policy. The entirety of security domain rules therefore defines the MAC policy. A process is allocated to a security domain when it is started. As a result, a process will be constrained to the privileges defined by the rules in the security domain definition. In an example embodiment, there may exist three different categories of security domains: a first with a low level, a second with a medium level and a third with a high security level. Processes may run in different security domains. For example, a process running in a security domain with a high security level may only be allowed access to one certain resource on the device, while processes running in a security domain with a low security level will be allowed access to a larger set of resources.

Checking for integrity and authenticity of the data (received adapted or updated MAC policy) refers to security checking. Integrity is about making sure that the data has not been altered from some "reference version", e.g. from the origin or source of the MAC policy provider. Authenticity is a special case of integrity, where the "reference version" is defined as "whatever it was when it was under control of a specific entity". Authentication is about making sure that a given entity (with whom you are interacting) is who you believe it to be. The checking may be executed by verifying a cryptographic signature of data, that was signed using either a shared secret key (for example in a keyed-hash message authentication code, HMAC), or a private key in an asymmetric signature scheme.

A master PAP is also a functional entity similar to the PAP but with an additional functional entity for executing superordinated or higher level functions. The master PAP is in data exchange with device external network nodes and entities. The master PAP is adapted to execute all functions and methods which need to be executed on each of the subordinated PAPs and which therefore may be executed centrally for all PAPs. The functions comprise checking integrity, checking authenticity of data packets. In other embodiments further central evaluations may be executed, like an analysis whether the data packet has been received completely. Furthermore, the master PAP can forward MAC policy adaptations required for specific domains to the respective subordinate PAP. The master PAP may additionally derive concrete MAC policy adaptations based on received policy metadata and/or other sources of information, such as a device-local state, the applications currently running on the device, or the presence of a certain physical interface.

According to an idea of the invention, trigger events are detected automatically and locally on the device or in the network. In response to the detected content of the trigger events, automatic adaption or update of the MAC policy is initiated. For example, it may be checked, if a new application has been installed on the device. In this case, a pre-definable rule set may be accessed, which defines, that in case of a new application upload, the MAC policy adaption/update has to be initiated. Thus, in this case, an instruction will be generated on the device to implement the adapted MAC policy automatically. Another example relates to the system state or configuration. If a boot mode is finalized and the device is operated in the normal operational mode, a rule set may define, that this is also a trigger event for initiating a MAC policy adaption (or update). Other trigger events relate to the involvement or embedding of the device into the physical or logical network. For example, an adapted MAC policy may be derived from the results of a network endpoint assessment (NEA) when the device is connected to a network. This adapted MAC policy can then be supplied to the PAP(s) on the device, which will subsequently implement the changes.

### BRIEF DESCRIPTION OF THE DRAWINGS

- Fig. 1: shows a schematic representation of a device, which may be an embedded system device in an overview manner.
- Fig. 2: shows a more detailed schematic representation of a device according to a preferred embodiment of the invention.
- Fig. 3: represents another preferred embodiment of a structure of the device.
- Fig. 4: represents a schematic representation of two possible embodiments for a PAP architecture.
- Fig. 5: is another example embodiment for the PAP architecture.
- Fig. 6: is a flow chart representing possible trigger events for executing automatic adaption of the MAC policy.

### DETAILED DESCRIPTION OF THE DRAWINGS

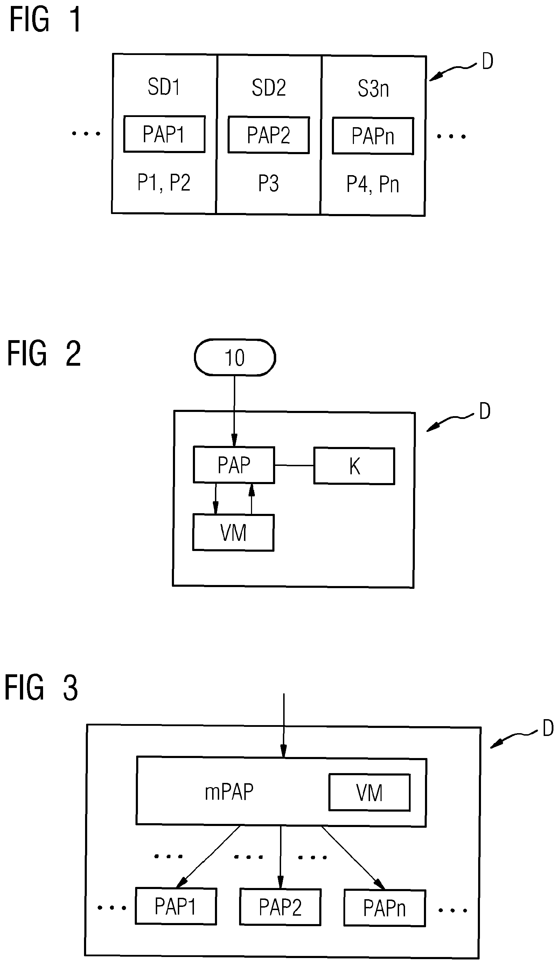

**Figure 1** shows an overview of a device D for use in an embedded system. The device D may for example be a control device for controlling an automation system. The device D comprises a processor, for example in the form of a microprocessor or microcontroller for executing specific functions which are implemented in an application or process P1, P2, P3,...Pn. Each of the processes P runs in a dedicated MAC security domain SD. The security domain is a set of rules for specifying which resources processes that are running in the security domain are allowed to access. The domains are defined in the mandatory access control policy (in short MAC policy). The device D comprises at least one policy administration point PAP, which serves to administer and manage the domains defined in the MAC policy for the processes P on the device D. Typically, one policy administration point PAP may be responsible for and serve one or more security domains SD. However, the system architecture excludes that more than one policy administration point PAP serve the same security domain SD.

In the example embodiment shown in Fig. 1, security domain 1 serves processes P1 and P2 and PAP1 is allocated to this security domain 1. PAP2 is responsible for security domain SD2 with process P3 and PAPn is allocated to security domain SD3 for processes P4 and Pn. The device D is in data exchange with other network devices or network elements NE and may receive an adapted MAC policy from a central entity.

**Figure 2** shows a more detailed architecture of the device D with the policy administration point PAP, which is in data exchange with the operating system kernel K, which receives and enforces the MAC policy. The system kernel K is responsible for policy enforcement on the device D. In a preferred embodiment, the operating system is a Linux-based system. The device D further comprises a validation module VM. The validation module may be adapted for checking integrity and authenticity of the exchanged data and in particular of the adapted MAC policy. The adapted MAC policy 10 is received and provided on the policy administration point PAP as shown in Fig. 2 with the arrow in downward direction. In case of validation of the adapted MAC policy, provided on the policy administration point PAP, the policy administration point PAP instructs the operating system kernel K to implement the adapted MAC policy, for example via a dedicated operating system instruction. In this embodiment, each of the policy administration point PAPs is responsible for checking integrity and authenticity of the received adapted MAC policy 10 by itself. This may lead to redundant processing for each of the policy administration point PAPs on the device D.

Therefore, in another preferred embodiment, shown in **Figure 3** a master policy administration point mPAP is provided in addition to the set of PAPs on each device D. The master policy administration point mPAP is adapted to receive the adapted MAC policy 10 and to forward the same to the validation module VM, which in this embodiment is located in the master policy administration point mPAP and centrally services all the different PAPs of the device D. In this embodiment, the higher ranking functions, comprising check of integrity and authenticity, and possibly modifying the adapted policy rules or metadata based on device-specific characteristics, may only be executed once for all associated PAPs. This serves to reduce processing resources.

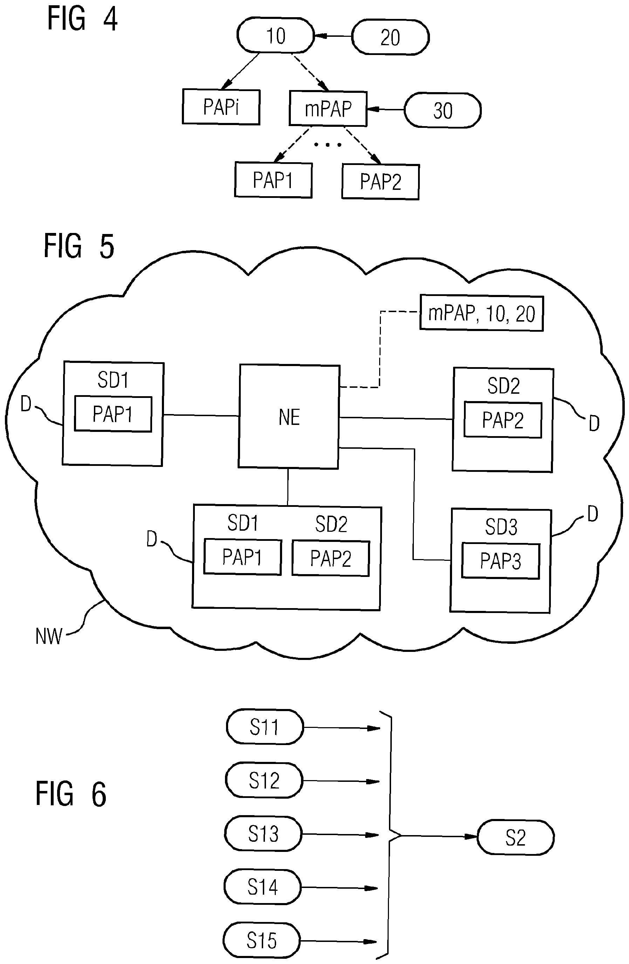

**Figure 4** relates to the trigger event 'connecting the device to the network' for adapting the MAC policy automatically. A network endpoint assessment (NEA) is executed. The NEA policy 20 may be provided to the MAC policy 10, which is to be provided on the PAP or master policy administration point mPAP, depending on the embodiment. In Fig. 4 on the left side, the embodiment is shown with the group of PAPs which are provided with the adapted MAC policy 10. On the right side and depicted with dotted lines the embodiment is shown, where the device D additionally comprises a master policy administration point mPAP, which will be provided with the adapted MAC policy 10. A NEA posture validation point, i.e., a NEA server node that collects endpoint specific data 30 from multiple endpoints, may be used for providing collected endpoint specific data 30, which will be provided to the master policy administration point mPAP.

An example embodiment is explained below with respect to **Figure 5**. A network element NE is in network connection with the devices D. The network is a physical network, for example a wireless network (WLAN, etc.). Several instances of the device D are depicted in Figure 5 for different security domains SD. On the left, the device D is shown with its first security domain SD1 and with associated PAP1; on the right, the device D is depicted with its second security domain SD2 and with associated PAP2 and below third security domain SD3 with PAP3. Further, the device D represented at the bottom comprises two different security domains SD1 and SD2 with corresponding PAP1 and PAP2. The devices D are connected in the network NW and in case of shared resources or processes, also majority decisions of the group of devices are possible for validating the adapted MAC policy 10. Only if all the cooperating devices transmit a validation signal for the adapted MAC policy, the same will be implemented on the set of cooperating devices.

In a preferred embodiment a network endpoint assessment NEA is executed, as explained above. The NEA data and/or the adapted MAC policy are provided to the policy administration point PAP, master policy administration point mPAP and/or to the network element NE. This should be represented in Fig. 5 with the dotted line and rectangle having the reference numerals mPAP, 20, 10.

**Figure 6** shows different possible scenarios for triggering events for initiating the instruction of automatically implementing the adapted MAC policy in the device D. In step S11 a state of the device D is detected automatically. In step S12 a configuration state or an operating mode (boot mode, functional operating mode, service mode) are detected. In dependence of the signal received from the respective detectors, the device is instructed to activate the received adapted MAC policy 10, e.g. by instructing the policy administration point to send an implementation instruction to the processor operating system kernel K of the device D in step S2. Another option is to detect in step S14 whether a new application process P has been loaded onto the device D or in step S13 an update of the application has been loaded. In either case, this will be detected automatically by a sensor unit which will again transmit a respective signal. In case the signal represents that a new application (update) has been loaded, a rule database may be accessed so that it can be calculated that the adapted MAC policy should be implemented in step S2. In this respect it has to be mentioned that the rules database for the trigger event signals and their relation to the instruction to implement the adapted MAC policy may be changed during runtime and even independently of the MAC policy adaption process. This improves flexibility of the system. Another option is to detect the network connection of the device D in conjunction with a network endpoint assessment NEA. This may be achieved with an NEA module which serves as a sensor to detect the attachment of a new device, providing information on network connections and device configurations. The respective sensor signal (e.g. new network connection established) is evaluated in relation to the rules database. An actualization or update of the MAC policy is automatically instructed to be implemented in step S2. That means that depending on the information provided by the NEA module, the MAC policy is updated automatically according to the defined rules database.

While the current invention has been described in relation to its preferred embodiments, it is to be understood that this description is for illustrative purposes only. For example, the device D may be an embedded system or another technical apparatus in an automation system, for example being administered by a network element. For the person skilled in the art it is clear that the invention may also be used for devices D communicating via different networks NW. For example, the network NW may be a wireless network or a network based on TCP/IP. Accordingly, it is intended that the invention be limited only by the scope of the claims appended hereto.

## Claims

1. Method for adapting a MAC policy for processes (P), running in different security domains (SD) on an industrial device (D) within a network (NW), comprising the following steps:
- Providing a policy administration point (PAP) locally on the industrial device (D) for at least one of the security domains (SD);
- Providing an adapted MAC policy (10) in the policy administration point (PAP);
- Checking integrity and authenticity of the adapted MAC policy (10) and in case of validation:
- Instructing the industrial device (D) to implement the adapted MAC policy (10) automatically.

2. Method according to claim 1, wherein at least one policy administration point (PAP) is allocated and responsible for at least one security domain (SD).

3. Method according to any of the preceding claims, wherein a master policy administration point (mPAP) is provided for all policy administration points (PAP) on the device, wherein the master policy administration point (mPAP) instructs all policy administration points (PAP) specifically with its respectively adapted MAC policy (10), wherein the master policy administration point (mPAP) is responsible for checking integrity and authenticity of the received adapted MAC policy (10) for all policy administration points.

4. Method according to any of the preceding claims, wherein a state of the device (D) is detected automatically and based on the detected state, the adapted MAC policy (10) is activated automatically.

5. Method according to any of the preceding claims, wherein the adapted MAC policy (10) is provided by receiving the same from an external network entity.

6. Method according to any of the preceding claims, wherein the adapted MAC policy (10) is provided by automatically analyzing the process for extracting security rules from the process (P), based on a process analysis mechanism, which is executed locally on the device (D).

7. Method according to the directly preceding claim, wherein the method is executed after a process update has been loaded on the device (D) or after installation of a new process on the device (D).

8. Method according to the directly preceding claim, wherein the process analysis mechanism analyzes the process (P) with respect to its interfaces and parameterizes a pre-configurable template for determining the adapted MAC policy (10) automatically.

9. Method according to any of the preceding claims, wherein the method comprises to detect a deletion or de-installation of a process (P) on the device (D) and based thereon the corresponding adaptions of the MAC policy, which have been implemented in response to installation of the process (P), are automatically removed again.

10. Method according to any of the preceding claims, wherein the adapted MAC policy controls access to shared processes (P), which are shared between cooperating devices (D) and wherein a decision with respect to the adaption of the MAC policy has to be validated by all cooperating devices (D).

11. Method according to any of the preceding claims, wherein the method for adapting the MAC policy is executed automatically after connecting to a network endpoint assessment (NEA).

12. System for adapting a MAC policy for processes, running in different security domains (SD) on an industrial network device (D) of a plurality of industrial network devices, wherein each of the industrial network devices (D) comprises a policy administration point (PAP), in which an adapted MAC policy (10) is provided, and wherein the system further comprises a validation module (VM), which is adapted to check integrity and authenticity of the received adapted MAC policy (10) and which is further adapted to instruct the industrial network device (D) to automatically implement the adapted MAC policy (10) in case of validation.

13. System according to the directly preceding system claim, wherein the system further comprises a master policy administration point (mPAP), wherein each of the policy administration points (PAP) is subordinated communicating with the master policy administration point (mPAP), wherein the master policy administration point (mPAP) comprises the validation module (VM) for checking integrity and authenticity for all policy administration points.

14. Industrial network device with a policy administration point (PAP) in which an adapted MAC policy (10) is provided for adapting a MAC policy for processes (P), running in different security domains (SD) of the industrial network device (D) for use in a system according to any of the preceding system claims.

15. Computer program with program code for executing a method according to any of the preceding method claims, if the computer program is executed on an industrial network device (D).
